# EUROPEAN PATENT SPECIFICATION

(11) **EP 0 525 051 B1**
(45) Date of publication and mention of the grant of the patent: **28.02.1996**
(21) Application number: 91908141.4
(22) Date of filing: 04.04.1991
(51) Int. Cl.: C08L 69/00, C08L 67/02

(54) **POLYCARBONATE/AROMATIC POLYESTER BLENDS CONTAINING AN OLEFINIC MODIFIER**
OLEFINISCHES MODIFIZIERUNGSMITTEL ENTHALTENDE MISCHUNGEN VON POLYKARBONAT UND AROMATISCHEM POLYESTER
MELANGES DE POLYCARBONATE/POLYESTER AROMATIQUE CONTENANT UN AGENT DE MODIFICATION OLEFINIQUE

(30) Priority: 12.04.1990 US 508997
(43) Date of publication of application: 03.02.1993
(73) Proprietor: THE DOW CHEMICAL COMPANY, Midland, Michigan 48640 (US)
(72) Inventor: LAUGHNER, Michael, K., Lake Jackson, TX 77566 (US)
(74) Representative: Raynor, John
(86) International application number: US9102346
(87) International publication number: WO9116379

(56) References cited:
- EP-A- 0 107 048
- EP-A- 0 180 648
- EP-A- 0 304 040
- EP-A- 0 352 822
- EP-A- 0 355 596
- EP-A- 0 386 674
- GB-A- 2 061 973
- US-A- 4 554 315

## Description

This invention relates to compositions containing polycarbonate blended with other polymers, and relates particularly to polycarbonate compositions having both improved solvent resistance and improved impact and flexural strength.

Polycarbonate has found many uses because, in general, it combines a high level of heat resistance and dimensional stability with good insulating and noncorrosive properties, and it is easily molded. It does, however, suffer from a tendency to craze and crack under the effects of environmental stress, especially contact with organic solvents such as gasoline. Polycarbonate which has crazed is, undesirably, more likely to experience brittle rather than ductile failure. This disadvantage has been somewhat relieved by the practice of blending polycarbonate with substances such as various olefin polymers. These added substances are capable of improving the resistance of polycarbonate to solvents, but they tend to delaminate and cause an offsetting reduction in the toughness, impact resistance and weldline strength of the blended high gloss polycarbonate composition. It would accordingly be desirable if substances admixed with polycarbonate for the purpose of improving its environmental stress failure resistance, for example resistance to organic solvents, did not also deleteriously affect its toughness and impact and weldline strength, and cause delamination as evidenced by peeling or splintering.

In Chung, U.S. Pat. No. 4,554,315, a system to promote the level of mechanical properties of polycarbonate is described wherein polycarbonate is blended with a polyester, an epoxide-containing modifier (preferably containing styrene and methyl methacrylate), and 5-30 percent of a core-shell, impact modifying graft polymer. However, no recognition exists therein of the possibility of strengthening polycarbonate while maintaining a useful level of solvent resistance by employing a graft polymer in the system at levels below 5 percent, or by employing none at all, or by employing in place of the graft polymer a thermoplastic elastomer or a rubber-modified styrene/acrylonitrile copolymer.

This invention provides a composition of matter comprising,
a. an aromatic polycarbonate;
b. an aromatic polyester;
c. a terpolymer, having a glass transition temperature less than 0°C, comprising
   (i) (A) an olefin monomer, or (B) a copolymer containing a sufficient amount of an olefin monomer to impart a glass transition temperature of less than 0°C to the terpolymer;
   (ii) at least one vinyl monomer carrying at least one epoxide group; and
   (iii)at least one vinyl monomer not carrying an epoxide group; and
d. an elastomer component,
characterised in that the elastomer component (d) is a block copolymer comprising a rigid "A" block which has a glass transition temperature above 23-25°C, and a rubbery "B" block which has a glass transition temperature below 23-25°C,
wherein the "A" block polymer is a polyester, and the "B" block polymer is a polyether,
wherein the "A" block polymer is a polystyrene, and the "B" block polymer is a polybutadiene, a polyisoprene, or an ethylene/butylene copolymer, or
wherein the "A" block polymer is a polyurethane, and the "B" block copolymer is a polyester or polyether.

The composition of the invention may also preferably comprise (when such component is not already present as component (d)), (e) one or more members of the group of elastomers consisting of
(i) a block copolymer having a rigid "A" block of polyurethane having a glass transition temperature above 23-25°C and a rubbery "B" block of polyester, polyether or a mixture thereof having a glass transition temperature below 23-25°C;
(ii) a block copolymer comprising a rigid "A" block of polyester which has a glass transition temperature above 23-25°C, and a rubbery "B" block of polyether which has a glass transition temperature below 23-25°C;
(iii)a polyether rubber;
(iv) a block copolymer comprising a rigid "A" block polymerized from a vinyl aromatic compound and having a glass transition temperature above 23-25°C and a rubbery "B" block polymerised from a diene having a glass transition temperature below 23-25°C;
(v) less than five percent, by weight of the total composition, of a core-shell graft copolymer containing more than 40 percent rubber by weight; or
(vi) butyl rubber, ethylene/propylene copolymer, ethylene/propylene/diene copolymer, neoprene, nitrile rubber, polybutadiene, polyisoprene, or a mixture thereof.

The compositions of this invention are useful, for example, in the production of films, fibers, extruded sheets, multi-layer laminates and molded or shaped articles of virtually all varieties, especially appliance and instrument housings, automobile body panels and other components for use in the automotive and electronics industries. The methods of this invention are useful for preparing compositions and molded articles having applications which are the same as or similar to the foregoing.

The compositions of this invention are those in which (a) polycarbonate has been admixed in a blended composition with (b) an aromatic polyester, and (c) an epoxide-containing modifier having a glass transition temperature ("T*g*") less than 0°C, and the said elastomer component. Suitable ranges of content for components (a), (b) (c), and (d) in the compositions of this invention, expressed in parts by weight, are as follows:
(a) polycarbonate from 5 parts to 95 parts, and preferably from 10 parts to 85 parts,
(b) aromatic polyester from 5 parts to 95 parts, preferably from 10 parts to 70 parts, and
(c) epoxide-containing modifier from 0.1 part to 20 parts, and preferably from 1 parts to 15 parts.
(d) thermoplastic elastomer up to twenty-five percent (25 percent), and preferably up to fifteen percent (15 percent),
   (d)(ii) rubber-modified styrene/acrylonitrile copolymer, up to twenty-five percent (25 percent ), and preferably up to fifteen percent (15 percent ), and
   (d)(iii) core-shell graft polymer, less than five percent (5 percent ), and preferably up to four percent (4 percent ).

Compositions prepared within the above ranges of content possess not only desirable levels of environmental stress failure resistance, but possess as well impact and flexural strength and heat distortion properties which are superior to those of compositions which contain a core-shell graft polymer at a level of 5 wt percent or more.

Preparation of the compositions of this invention can be accomplished by any suitable mixing means known in the art. Typically the substances to be admixed with polycarbonate are dry blended in particulate form with sufficient agitation to obtain thorough distribution thereof within the polycarbonate. If desired, the dry-blended formulation can further, but need not, be melt mixed in an extruder. Mixing rolls, a dough-mixer or a Banbury mixer can also be used in the blending. Alternatively, a master batch formulation can be prepared containing polycarbonate or polyester and the substances to be admixed or blended with it, wherein the polycarbonate (or polyester) is present in only a minor proportion, *e.g.* 20 percent . The master batch is then available for storage or shipment in commerce, and can be diluted with additional polycarbonate (or polyester) at the time of use.

The compositions of this invention can be formed or molded using conventional techniques such as compression, injection, calendering, vacuum forming, extrusion and/or blow molding techniques, alone or in combination. The compositions can also be formed into films, fibers, multi-layer laminates or extruded sheets on any machine suitable for such purpose.

*(α)Polycarbonate.* The aromatic polycarbonates suitable for use in the present invention are produced by any of the conventional processes known in the art for the manufacture of polycarbonates. Generally, aromatic polycarbonates are prepared by reacting an aromatic dihydric phenol with a carbonate precursor, such as phosgene, a haloformate or a carbonate ester.

A preferred method for preparing suitable polycarbonates involves the use of a carbonyl halide, such as phosgene, as the carbonate precursor. This method involves passing phosgene gas into a reaction mixture containing an activated dihydric phenol, or a nonactivated dihydric phenol and an acid acceptor, such as pyridine, dimethyl aniline, quinoline and the like. The acid acceptor may be used undiluted or diluted with inert organic solvents, such as methylene chloride, chlorobenzene or 1,2-dichloroethane. Tertiary amines are advantageous since they are good solvents as well as acid acceptors during the reaction.

The temperature at which the carbonyl halide reaction proceeds may vary from below 0°C to 100°C. The reaction proceeds satisfactorily at temperatures from room temperature to 50°C. Since the reaction is exothermic, the rate of phosgene addition may be used to control the temperature of the reaction. The amount of phosgene required will generally depend upon the amount of dihydric phenol present. Generally speaking,. one mole of phosgene will react with one mole of dihydric phenol to form the polycarbonate and two moles of HCl. The HCl is in turn taken up by the acid acceptor.

Another method for preparing the aromatic polycarbonates useful in this invention involves adding phosgene to an alkaline aqueous suspension of dihydric phenols. This is preferably done in the presence of inert solvents such as methylene chloride and 1,2-dichloroethane. Quaternary ammonium compounds may be employed to catalyze the reaction.

Yet another method for preparing such aromatic polycarbonates involves the phosgenation of an agitated suspension of an anhydrous alkali salt of an aryl diol in a nonaqueous medium such as benzene, chlorobenzene or toluene. The reaction is illustrated by the addition of phosgene to a slurry of the sodium salt of, for example, Bisphenol A in an inert polymer solvent such as chlorobenzene.

Generally speaking, a haloformate such as the bis-haloformate of Bisphenol A may be used in place of phosgene as the carbonate precursor in any of the methods described above.

When a carbonate ester is used as the carbonate precursor in the polycarbonate-forming reaction, the materials are reacted at temperatures in excess of 100°C for times varying from 1 to 15 hours. Under such conditions, ester interchange occurs between the carbonate ester and the dihydric phenol used. The ester interchange is advantageously consummated at reduced pressures on the order of from 10 to 100 millimeters of mercury, preferably in an inert atmosphere such as nitrogen or argon.

Although the polymer-forming reaction may be conducted in the absence of a catalyst, one may, if desired, employ a typical ester exchange catalyst, such as metallic lithium, potassium, calcium or magnesium. The amount of such catalyst, if used, is usually small, ranging from 0.001 percent to 0.1 percent , based on the weight of the dihydric phenols employed.

In the solution methods of preparation, the aromatic polycarbonate emerges from the reaction in either a true or pseudo solution depending on whether an aqueous base or pyridine is used as an acid acceptor. The copolymer may be precipitated from the solution by adding a polymer nonsolvent, such as heptane or isopropanol. Alternatively, the polymer solution may be heated, typically under reduced pressure, to evaporate the solvent.

The methods and reactants described above for preparing carbonate polymers suitable for use in the practice of this invention are discussed in greater detail in Schnell, US Pat. No. 3,028,365; Campbell, US Pat. No. 4,384,108; Glass, US Pat. No. 4,529,791; and Grigo, US Pat. No. 4,677,162.

A preferred aromatic polycarbonate is characterized by repeating units corresponding to the general formula: 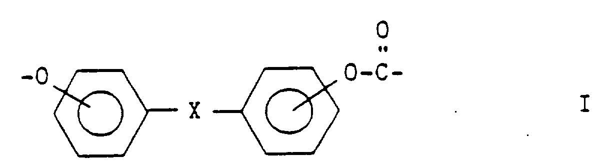 wherein X is a linear or cyclic, divalent C₁-C₂₀ hydrocarbon radical, a single bond, -0-, -S-, -S₂-, -SO-, -SO₂-, or -CO-. Each aromatic ring may additionally contain, instead of hydrogen, up to four substituents such as C₁-C₄ alkyl hydrocarbon or alkoxy radicals, aryl or aryloxy radicals, or halo radicals.

Although the polycarbonates mentioned above, such as those derived from 2,2-bis(4-hydroxyphenyl)propane ("Bisphenol-A" or "Bis-A") or from 1,1-bis(4-hydroxyphenyl)-1-phenyl ethane ("Bisphenol-A-P" or "Bis-A-P"), can each be employed in this invention as a homopolymer, the carbonate polymers used herein can also be derived from two or more bisphenols, or two or more acid- or hydroxy-terminated reactants such as dicarboxylic acids or alkylene glycols, or from two or more different dihydroxy compounds, or mixtures of any of the foregoing, in the event a carbonate copolymer or interpolymer, such as a copolyester/carbonate is desired, rather than a homopolymer.

Copolymers can be formed, for example, when a bisphenol is reacted with a carbonic acid derivative and a polydiorganosiloxane containing α,ω-bishydroxyaryloxy terminal groups to yield a siloxane/carbonate block copolymer (as are discussed in greater detail in Paul, USP 4,569,970), or when a bisphenol is reacted with a bis(ar-haloformylaryl) carbonate to yield an alternating copolyestercarbonate. The bis(ar-haloformylaryl) carbonate is formed by reacting a hydroxycarboxylic acid with a carbonic acid derivative under carbonate forming conditions, such copolyestercarbonates being discussed in greater detail in Swart, USP 4,105,533.

The term "polycarbonate" as used herein, and in the claims appended hereto, should therefore be understood to include carbonate homopolymers, carbonate copolymers (as described above), and/or blends of carbonate homopolymers and/or carbonate copolymers.

*(b)Polyester.* The aromatic polyester used in this invention may be made by a variety of methods. Although the self-esterification of hydroxycarboxylic acids is known, direct esterification, which involves the reaction of a diol with a dicarboxylic acid with the resulting elimination of water, is a more frequently used method for commercial production, giving an -[-AABB-]- polyester. Although the presence of a catalyst such as p-toluene sulfonic acid, a titanium alkoxide or a dialkyltin oxide is helpful, the primary driving force behind the direst esterification reaction is heat. Temperatures applied exceed the melting points of the reactants and typically approach the boiling point of the diol being used, and usually range from 150°C to 280°C. An excess of the diol is typically used, and once all of the acid has reacted with diol, the excess diol is removed by distillation with the application of additional heat under reduced pressure. The ester of the diacid initially formed from the diol, having -OH end groups, undergoes alcoholysis and polymerization to form polymeric esters and the diol is split out as a byproduct and removed from the reaction zone. The reaction is typically carried out in the presence of an inert gas.

Alternatively, but in like manner, ester-forming derivatives of a dicarboxylic acid can be heated with a diol to obtain polyesters in an ester interchange reaction. Suitable acid derivatives for such purpose are esters, halides, salts or anhydrides of the acid. When a bis ester of the diacid is used for purposes of the interchange reaction, the alcohol from which the ester is formed (the alcohol to be displaced) should be lower boiling than the diol to be used for formation of polyester (the displacing alcohol). The reaction can then be conveniently run at a temperature at or below the boiling point of the displacing alcohol but well above that of the displaced alcohol, and is usually run in a temperature range similar to that for direct esterification. The ester interchange reaction is typically run in the presence of a diluent, for example, an inert organic solvent such as chloroform or tetrachloroethane, and in the presence of a base, for example a tertiary organic base such as pyridine. Typical catalysts used when ester interchange involves alcoholysis are weak bases such as carbonates or alkoxides of sodium, lithium, zinc, calcium, magnesium or aluminum, whereas catalysts such as antimony oxide, titanium butoxide or sodium acetate are often used when acidolysis occurs in the interchange reaction. Diol derivatives such as an acetate can be used effectively when it is desired to conduct acidolysis.

Maintenance of high temperature is an important aspect of esterification, particularly toward the end of the reaction. As a consequence, thermal ester scission competes with polymer growth as the prevailing result of the process, which places an upper limit on the molecular weight which can be achieved through the use of melt polymerization. The molecular weight of polyester can be increased by adding a chain coupling agent, such as diphenyl carbonate, to the melt reaction mixture just prior its completion. Or, to achieve higher weight by solid state polymerization, polyester product of intermediate weight can be heated in a vacuum or stream of inert gas, first to a temperature where it crystallizes and then to a temperature close to its melting point.

Polyesters can also be produced by a ringopening reaction of cyclic esters or lactones, for which organic tertiary bases and alkali and alkaline earth metals, hydrides and alkoxides can be used as initiators. Advantages offered by this type of reaction are that it can be run at lower temperatures, frequently under 100°C, and there is no need to remove a condensation product from the reaction.

Whether a polyester is crystalline or amorphous is typically a function of the symmetry of the starting materials from which it is made. When one or more hydrogens on the diol and/or the diacid (or derivative) which are reacted to form a polyester are replaced by larger radicals such as alkyl or halogen, the intermolecular spacing of the resulting molecules may be disrupted if the presence of the substituent creates assymetric or irregularly shaped molecules. The component containing the substituent may also be combined into the polyester molecule in random orientation, resulting in structural irregularity in the polymer chain. Factors which can influence crystallization of ring-containing polyesters are the directionality of the ester groups, the stereochemistry of the rings and variations in symmetry where the rings are bridged. For example, a poly(alkylene isophthalate) crystallizes only with difficulty, and a polyester prepared from phthalic acid typically does not crystallize at all. However, where the amount of monomer containing the asymmetry is small in relation to the remainder of the starting materials, the portion of the resulting polyester molecule which suffers from structural irregularity will also be small, and crystallization will typically not be impeded. A crystalline material may be identified by the endotherm it displays on a differential scanning calorimeter.

Suitable reactants for making the polyester used in this invention, in addition to hydroxycarboxylic acids, are diols and dicarboxylic acids either or both of which can be aliphatic or aromatic. A polyester which is a poly(alkylene alkanedicarboxylate), a poly(alkylene phenylenedicarboxylate), a poly(phenylene alkanedicarboxylate), or a poly(phenylene phenylenedicarboxylate) is therefore appropriate for use herein. Alkyl portions of the polymer chain can be substituted with, for example, halogens, alkoxy groups or alkyl side chains and can contain divalent heteroatomic groups (such as -O-, -S- or -SO₂-) in the paraffinic segment of the chain. The chain can also contain unsaturation and non-aromatic rings. Aromatic rings can contain substituents such as halogens, alkoxy or alkyl groups, and can be joined to the polymer backbone in any ring position and directly to the alcohol or acid functionality or to intervening atoms.

Typical alkylene diols used in ester formation are the C₂-C₁₀ glycols, such as ethylene-, propylene-, and butylene glycol. Alkanedicarboxylic acids frequently used are oxalic acid, adipic acid and sebacic acid. Diols which contain rings can be, for example, a 1,4-cyclohexylenyl glycol or a 1,4-cyclohexanedimethylene glycol, resorcinol, hydroquinone,4,4-thiodiphenol, bis-(4-hydroxyphenyl)sulfone, a dihydroxynaphthalene, a xylylene diol, or can be one of the many bisphenols such as 2,2-bis-(4-hydroxyphenyl)propane. Aromatic diacids include, for example, terephthalic acid, isophthalic acid, naphthalenedicarboxylic acid, diphenyletherdicarboxylic acid, diphenyldicarboxylic acid, diphenylsulfonedicarboxylic acid, diphenoxyethanedicarboxylic acid.

In addition to polyesters formed from one diol and one diacid only, the term "polyester" as used herein includes random, patterned or block copolyesters, for example those formed from two or more different diols and/or two or more different diacids, and/or from other divalent heteroatomic groups. Mixtures of such copolyesters, mixtures of polyesters derived from one diol and diacid only, and mixtures of members from both of such groups, are also all suitable for use in this invention, and are all included in the term "polyester". For example, use of cyclohexanedimethylol together with ethylene glycol in esterification with terephthalic acid forms a clear, amorphous copolyester ("PETG") of particular interest. Also contemplated are PCTG; liquid crystalline polyesters derived from mixtures of 4-hydroxybenzoic acid and 2-hydroxy-6-naphthoic acid; or mixtures of terephthalic acid, 4-hydroxybenzoic acid and ethylene glycol; or mixtures of terephthalic acid, 4-hydroxybenzoic acid and 4,4'-dihydroxybiphenyl.

Aromatic polyesters such as the poly(alkylene phenylenedicarboxylates) polyethylene terephthalate and polybutylene terephthalate, or mixtures thereof, are particularly useful in this invention.

Methods and materials useful for the production of polyesters, as described above, are discussed in greater detail in Whinfield, US Pat. No. 2,465,319, Pengilly, US Pat. No. 3,047,539 and Russell, US Pat. No. 3,756,986.

*(c)Epoxide-containing modifier.* The epoxide-containing modifier used in this invention is a terpolymer which has a glass transition temperature ("T_{*g*}") less than 0°C. T_{*g*} is the temperature or temperature range at which a polymeric material shows an abrupt change in its physical properties, including, for example, mechanical strength. T_{*g*} can be determined, for example, by differential scanning calorimetry. The epoxide-containing modifier of this invention is formed as a terpolymer from
(i) (A) at least one olefin monomer such as ethylene, propylene, isopropylene, butylene orisobutylene, or at least one conjugated diene such as butadiene, and the like, or mixtures thereof, or (B) a copolymer of one or more olefin monomers, such as described above, with other vinyl monomer(s), but containing a sufficient amount of the olefin monomer(s) to impart a T_{*g*} of less than 0°C to the epoxide-containing modifier;
(ii) at least one vinyl *(i.e.* olefinically unsaturated, including vinylidene) or olefin monomer carrying at least one epoxide group; and
(iii) at least one vinyl *(i.e.* olefinically unsaturated, including vinylidene) monomer not carrying an epoxide group.

Representative vinyl *(i.e.* olefinically unsaturated, including vinylidene) monomers useful as component (c)(iii) in forming the terpolymer epoxide-containing modifier of this invention include the following: vinyl compounds (especially when they bear a polar, electronegative group or functionality) such as vinyl toluene, alphamethyl styrene, halogenated styrene; those containing nitrile groups such as copolymers of acrylonitrile, methacrylonitrile or alpha-halogenated acrylonitrile; a C₁-C₈ alkyl acrylate such as ethyl acrylate, butyl acrylate, hexyl acrylate or hydroxy ethyl acrylate; a C₁-C₈ alkyl methacrylate such as mehtyl methacrylate or hexyl methacrylate; others containing ester groups such as derivatives of acrylic or methacrylic acids, for example esters of said acids and any of the C₁-C₆ aliphatic or cycloaliphatic alcohols, especially the C₁-C₄ aliphatic or cycloaliphatic alcohols; an acrylic or methacrylic acid; the vinylidene monomers, especially when they bear a polar, electronegative group or functionality such as a halogen group, or an organic group having a double or triple bond such as phenyl, carboxy, cyano or the like; vinyl esters or vinyl ethers; alkenyl-aromatic compounds such as styrene and substituted derivatives thereof; maleimides; mononitriles having alpha-beta-olefinic unsaturation and lower alkyl or halogen substituents; esters of olefinically unsaturated carboxylic acids; aliphatic vinyl compounds such as vinyl chloride, vinylidene chloride, acrylic and methacrylic acid esters, amides and nitriles, vinyl acetate, vinyl propionate and vinyl benzoate; vinyl-methyl-ether, vinyl-ethyl-ether and vinyl-isobutyl-ether; and aromatic vinyl compounds such as styrene, alpha -methyl styrene, vinyl toluene, p-ethylstyrene, 2,4-dimethyl styrene, o-chlorostyrene and 2,5-dichlorostyrene; vinyl esters; vinyl ethers; alpha-olefins; vinyl toluenes; vinyl xylenes; the maleates; the fumarates; and the like; or mixtures of two or more of any of the foregoing. In general, vinyl and vinylidene monomers from groups such as the vinyl and vinylidene -esters, - ethers, -organic acids, -aromatics, -alcohols, - anhydrides, -halides, -nitriles and -amides; or mixtures of any of the foregoing may be used. Additionally, any one or more of the foregoing monomers may be copolymerized with carbon monoxide.

Vinyl monomers such as the foregoing may also be copolymerized as part of the olefin copolymer described above as component (c)(i)(B); or, when carrying an epoxide group, may be used as the component (c)(ii). Or, the epoxide group may be carried on an olefin monomer.

Suitable olefinically unsaturated monomers containing epoxide groups for use as component (c)(ii) of the terpolymer modifier include, for example, glycidyl esters of unsaturated carboxylic acids (glycidyl methacrylate); glycidyl ethers of unsaturated alcohols (allyl-glycidyl-ether) and of alkenylphenols (isopropenylphenyl-glycidylether); and vinyl and allyl esters of epoxycarboxylic acids (vinyl esters of epoxidized oleic acid). In general, all compounds which contain both a polymerizable unsaturated group and reactive epoxide groups in the molecule can be used for the manufacture of the modifier of the invention.

Copolymers of 1-25 percent (by weight) of glycidyl methacrylate, 40-95 percent of ethylene, and 4-40 percent of vinyl acetate are particularly suitable for use herein as the terpolymer modifier.

Copolymers containing epoxide groups may be obtained according to known processes, for example by radical polymerization in chlorobenzene at 80°C in 50 percent strength solution. For instance, monomers such as listed above are dissolved in an appropriate solvent, such as benzene, chlorobenzene or toluene, and polymerized at a temperature of 80°C by adding azobisisobutyronitrile, whereby oxygen is excluded. After the monomers have been reacted, the solvent used is distilled off *(e.g.,* chlorobenzene at 100°C and 20 torr) and the residue is dried in vacuum at 100°C and then powdered. The terpolymer modifier of this invention can also be prepared in gas phase under conditions suitable for polymerizing an olefin. For example, the terpolymer can be made in either a tubular reactor or a stirred autoclave, where heated, pressurized feed streams of olefin or vinyl monomer gas, peroxide free-radical initiator and chain transfer agent are injected into the reaction device. The reaction of formation usually occurs at 1,500-3,000 atm (152-304 MPa) and at a temperature usually not exceeding 300°C, as known in the art.

The molecular weight of the epoxide-containing terpolymer modifier is typically between 10,000 and 500,000, preferably between 30,000 and 200,000, and it typically contains 5 to 1,000, preferably 20 to 500, epoxide groups per macromolecule.

The block copolymer thermoplastic elastomers can be prepared, for example, by anionic polymerisation using an alkyl-lithium initiator. Hydrogenated styrene/ethylenebutylene/styrene block copolymers, such as that available for Shell Oil Co. as Kraton™ G-1651 rubber, are preferred.

*(d)(i) Thermoplastic Elastomer.* The optional thermoplastic elastomers useful in this invention are those which have a T_{g} less than 0°C. These thermoplastic elastomers are characterised, for example, in that they can be melted, for mixing or other purposes, and recooled without undergoing any change in properties; and they also retain their properties after having been dissolved and reformed upon removal of the solvent. The thermoplastic elastomers suitable for use herein are further characterised by the randomness of the shape and size they take on when mixed by shearing forces with the other components making up the compositions of this invention, especially when heat is applied during such mixing. Because the thermoplastic elastomer is typically a long chain molecule, segments of thermoplastic elastomer in the polymer composition matrix are generally elongated, linear ribbons or bands. However, chain coiling can yield globule-shaped segments of thermoplastic elastomer in the matrix. The random shape and size assumed in the polymer composition matrix by a thermoplastic elastomer may be distinguished from the shape and size assumed by optional component (d)(iii), the core-shell graft polymer.

The optional core-shell graft polymer is uniformly present in the polymer matrix in a bead shape both before and after mixing by application of shearing forces, whether heat is used or not, and is typically present in a rather narrow size range, for example 0.05-0.8 microns. The retention of this core-shell; or spherical, shape by the graft polymer, even after heating and mixing, results from the fact that the outer layers, which surround the core, are formed by grafting appropriate monomers onto the core. A core-shell graft polymer such as is used as optional component (d)(iii) typically cannot be melted and recooled without a change in properties because the graft polymer will tend to decompose or crosslink, and the bead-shaped segments of graft polymer will tend to agglomerate upon melting, making dispersion of them by mixing very difficult.

The optional thermoplastic elastomers useful in this invention are based generally on an olefinic backbone, and include mixtures of more than one of such thermoplastic elastomers. Representative examples of a few olefin-based rubbers which are suitable for use herein, individually or in a mixture, as thermoplastic elastomers are as follows:

Butyl rubber is the product of copolymerizing isobutylene and isoprene where the isoprene typically makes up no more than 2.5 mole percent of the copolymer. Although the solution process is used to manufacture butyl rubber, most of it is made by a precipitation (slurry) method wherein the monomers are copolymerized in methyl chloride diluent using a catalyst such as aluminum chloride.

In EPM (ethylene/propylene copolymer) rubber, the ratio of ethylene to propylene is from 50/50 to 75/25. A diene can be added to the copolymer to furnish a pendant group containing an addition polymerizable C=C bond. The diene, which can be straight chain or cyclic, is typically not conjugated, and the two C=C bonds typically have different activities with respect to polymerization. When a diene is copolymerized with ethylene and propylene, the product is known as EPDM rubber. EPM/EPDM rubbers can also be copolymerized or grafted with vinyl monomers such as styrene and acrylonitrile.

Formation of neoprene rubber by polymerization of 2-chloro-1,3-butadiene can result from addition involving both of the double bonds, or through just one of the two leaving the other as a pendant group. Neoprene rubber is typically made by free radical batch emulsion polymerization, but can also be made in a continuous process.

Nitrile rubber, which is polymerized from 1,3-butadiene and acrylonitrile, typically has 15-50 percent acrylonitrile content. It is usually preferred to make nitrile rubbers by emulsion in an aqueous system.

As with rubbers involving derivatives of butadiene, formation of polybutadiene can be by either 1,4 or 1,2 (vinyl) addition of the butadiene molecule. 1,4 products are either *cis* or *trans,* and vinyl products are classified as to tacticity. Polybutadiene rubber is typically manufactured by solution polymerization, using organic lithium compounds or coordination catalysts containing metals in reduced valence states.

Polyisoprene, with its pendant methyl group on what would otherwise be a butadiene unit, also polymerizes in *cis*-1,4, *trans-*1,4 or 1,2 (vinyl) form. Ziegler catalysts are frequently used in the polymerisation of polyisoprene.

Polyether rubbers include epichlorogydrin elastomers, which can be prepared either by a coordination polymerisation mechanism using an aluminum alkyl-water catalyst in a hydrocarbon solvent, or in solution using benzene, toluene or methylene chloride as the solvent. Propylene oxide elastomers can also be prepared in solution, by copolymerisation with allyl glycidyl ether, using a coordination catalyst such as diethyl zinc water.

An SBR rubber is a copolymer of styrene and butadiene which typically contains 23 percent styrene. Of the butadiene content, 18 percent of it *cis,* 65 present is *trans* and 17 percent is vinyl. The monomers themselves can be randomly dispersed along the backbone, or blocks of each monomer can be randomly dispersed.

Thermoplastic elastomers also include A-B-A or A-B block copolymers which have a rigid block "A" having a T_{*g*} above room temperature (approximately 23-25°C) and a rubbery block "B" having a T_{*g*} below room temperature. Examples of typical pairings of materials to form the respective A and B blocks of a block copolymer thermoplastic elastomer are shown in Table I.

**Table I**

| A Block | B Block |
|---|---|
| polyethylene | ethylene/butylene copolymer |
| polypropylene | EDPM rubber |

*(d)(v) Core-shell Graft Polymer.* The optional graft polymers suitable in this invention are of the core-shell type, contain more than 40 percent rubber, and are characterized in that their structure comprises an elastomeric core based substantially on either a diene or an acrylate, and a rigid grafted phase. These polymers are further characterized in that the glass transition temperature of the elastomeric phase is below 0°C, and the elastomeric phase may optionally be at least partially crosslinked. The grafted phase typically comprises at least one monomer selected from acrylic esters of saturated aliphatic alcohols, methacrylic esters of saturated aliphatic alcohols, vinyl acetate, acrylonitrile, styrene and alkyl styrene.

A diene rubber contains a substrate latex, or core, which is made by polymerizing a diene, preferably a conjugated diene, or by copolymerizing a diene with a mono-olefin or polar vinyl compound, such as styrene, acrylonitrile, or an alkyl ester of an unsaturated carboxylic acid such as methyl methacrylate. The substrate latex is typically made up of 40-85 percent diene, preferably a conjugated diene, and 15-60 percent of the mono-olefin or polar vinyl compound. The elastomeric core phase should have a glass transition temperature ("T_{*g*}") of less than 0°C, and preferably less than -20°C. A mixture of monomers is then graft polymerized to the substrate latex. A variety of monomers may be used for this grafting purpose, of which the following are exemplary: vinyl compounds such as vinyl toluene or vinyl chloride; vinyl aromatics such as styrene, alpha-methyl styrene or halogenated styrene; acrylonitrile, methacrylonitrile or alpha-halogenated acrylonitrile; a C₁-C₈ alkyl acrylate such as ethyl acrylate or hexyl acrylate; a C₁-C₈ alkyl methacrylate such as methyl methacrylate or hexyl methacrylate; acrylic or methacrylic acid; or a mixture of two or more thereof.

The grafting monomers may be added to the reaction mixture simultaneously or in sequence, and, when added in sequence, layers, shells or wart-like appendages can be built up around the substrate latex, or core. The monomers can be added in various ratios to each other although, when just two are used, they are frequently utilized in equal amounts. A typical weight ratio for methyl methacrylate/butadiene/styrene copolymer ("MBS" rubber) is 60-80 parts by weight substrate latex, 10-20 parts by weight of each of the first and second monomer shells. A preferred formulation for an MBS rubber is one having a core built up from 71 parts of butadiene, 3 parts of styrene, 4 parts of methyl methacrylate and 1 part of divinyl benzene; a second phase of 11 parts of styrene; and a shell phase of 11 parts of methyl methacrylate and 0.1 part of 1,3-butylene glycol dimethacrylate, where the parts are by weight of the total composition. A diene-based, core-shell graft copolymer elastomer and methods for making same, as described above, are discussed in greater detail in Saito, USP 3,287,443, Curfman, USP 3,657,391, and Fromuth, USP 4,180,494.

An acrylate rubber has a first phase forming an elastomeric core and a second phase forming a rigid thermoplastic phase said elastomeric core. The elastomeric core is formed by emulsion or suspension polymerization of monomers which consist of at least 50 weight percent alkyl and/or aralkyl acrylates having up to fifteen carbon atoms, and, although longer chains may be used, the alkyls are preferably C₂-C₆, most preferably butyl acrylate. The elastomeric core phase should have a T_{*g*} of less than 25°C, and preferably less than 0°C.

The rigid thermoplastic phase of the acrylate rubber is formed on the surface of the elastomeric core using suspension or emulsion polymerization techniques. The monomers necessary to create this phase together with necessary initiators are added directly to the reaction mixture in which the elastomeric core is formed, and polymerization proceeds until the supply of monomers is substantially exhausted. Monomers such as an alkyl ester of an unsaturated carboxylic acid, for example a C₁-C₈ alkyl acrylate like methyl acrylate, hydroxy ethyl acrylate or hexyl acrylate, or a C₁-C₈ alkyl methacrylate such as methyl methacrylate or hexyl methacrylate, or mixtures of any of the foregoing, are some of the monomers which can be used for this purpose. Either thermal or redox initiator systems can be used. Because of the presence of the graft linking agents on the surface of the elastomeric core, a portion of the chains which make up the rigid thermoplastic phase are chemically bonded to the elastomeric core. It is preferred that there be at least 20 percent bonding of the rigid thermoplastic phase to the elastomeric core.

A preferred acrylate rubber is made up of more than 40 percent to 95 percent by weight of an elastomeric core and 60 percent to 5 percent of a rigid thermoplastic phase. The elastomeric core can be polymerized from 75 percent to 99.8 percent by weight C₁-C₆ acrylate, preferably n-butyl acrylate. The rigid thermoplastic phase can be polymerized from at least 50 percent by weight of C₁-C₈ alkyl methacrylate, preferably methyl methacrylate. Acrylate rubbers and methods for making same, as described above, are discussed in greater detail in Owens, USP 3,808,180 and Witman, USP 4,299,928.

A variety of additives may be used in the compositions of this invention for protection against thermal, oxidative and ultra-violet degradation. Such additives may be included in the composition at any point during the processing, and the choice as to which additive is employed, if any, is not critical to this invention. Representative of the thermal and oxidative stabilizers which can advantageously be utilized are hindered phenols, hydroquinones, phosphites, including substituted members of those groups and/or mixtures of more than one thereof. A preferred phenolic antioxidant is Irganox™ 1076 anti-oxidant, available from Ciba-Geigy Corp. Ultra-violet stabilizers such as various substituted resorcinols, salicylates, benzotriazoles, benzophines, hindered amines and hindered phenols can also be usefully included in the compositions of this invention, as can be lubricants, colorants, fillers such as talc, clay or mica, pigments, ignition resistant additives and mold release agents, and reinforcement agents such as fiberglass. Additives and stabilizers such as the foregoing, and many others which have not been mentioned, are known in the art, and the decision as to which, if any, to use is not critical to this invention. However, such additives, if used, typically do not exceed 5 percent by weight of the total composition, except fillers or reinforcing agents, which may constitute up to 40 percent of the composition.

*Illustrative Embodiments.* To illustrate the practice of this invention, examples of several preferred embodiments are set forth below. It is not intended however, that these examples (Examples 1-7) should restrict the scope of this invention. Some of the particularly desirable features of this invention may be seen by contrasting the characteristics of Examples 1-7 with those of controlled formulations (Control A-D) which do not possess the features of, and are not therefore embodiments of, this invention.

The polycarbonate compositions prepared in Controls A-D and Examples 1-7 are made by dry blending the ingredients thereof and agitating same in a paint shaker for 7 minutes. The dry blended formulations are then melt mixed in a vented 30mm Werner-Pfleiderer corotating, twin screw extruder using a 270°C set temperature and 250 rpm. Each extruded composition is passed through a water bath, chopped into granules and collected for molding. Granules are thoroughly dried in a circulated air oven at 115°C for six hours prior to molding. All samples are prepared by injection molding on a 75 ton (6.8 x 10⁴ kg) Arburg molding machine. Molding temperatures for the barrel and mold are set at 280°C and 190°F (88°C), respectively.

The formulations of the polycarbonate compositions of Controls A-D and Examples 1-7 are given below in Table II in parts by weight. In Table II:
"(1) PC 300-10" is Calibre@300-10 polycarbonate resin, a 10 melt flow value polycarbonate resin available from The Dow Chemical Company;
"(2) PET 9506" is polyethylene terephthalate having 0.95 inherent viscosity (measured in accordance with ASTM Designation D 4603-86), available as Traytuf™ polyester from Goodyear Tire and Rubber Co.;
"(3) SMMAGMA" is a terpolymer, containing 60 parts styrene, 20 parts methyl methacrylate and 20 parts glycidyl methacrylate, which has a T_{*g*} greater than 0°C and has a weight-average molecular weight of approximately 30,000;
"(4) EVAGMA" is a terpolymer containing ethylene, vinyl acetate and glycidyl methacrylate (available from Sumitomo Chemical America), which has a weight-average molecular weight of approximately 100,000;
"(5) GRC 120" is a core-shell graft polymer containing approximately 50 percent rubber, wherein styrene and acrylonitrile are grafted onto a butadiene core;
"(6) Kraton™ G 1651" is a hydrogenated styrene/butadiene block thermoplastic elastomer copolymer from Shell Oil Company;
"(7) PA-2130" is a core-shell graft polymer containing 75 percent rubber (available from M&T Chemical Co.), wherein styrene and methyl methacrylate are grafted onto a butadiene core;
"(8) Vistalon™ 3708" is an EPDM thermoplastic elastomer available from Exxon Corp.;
"(9) ABS 941" is acrylonitrile/butadiene/styrene copolymer containing less than 30 percent rubbber, available from The Dow Chemical Company; and
"(10) EVA" is ethylene/vinyl acetate copolymer containing approximately 85 wt percent ethylene and 15 wt percent vinyl acetate, such as Elvax™ 3152 copolymer available from DuPont.

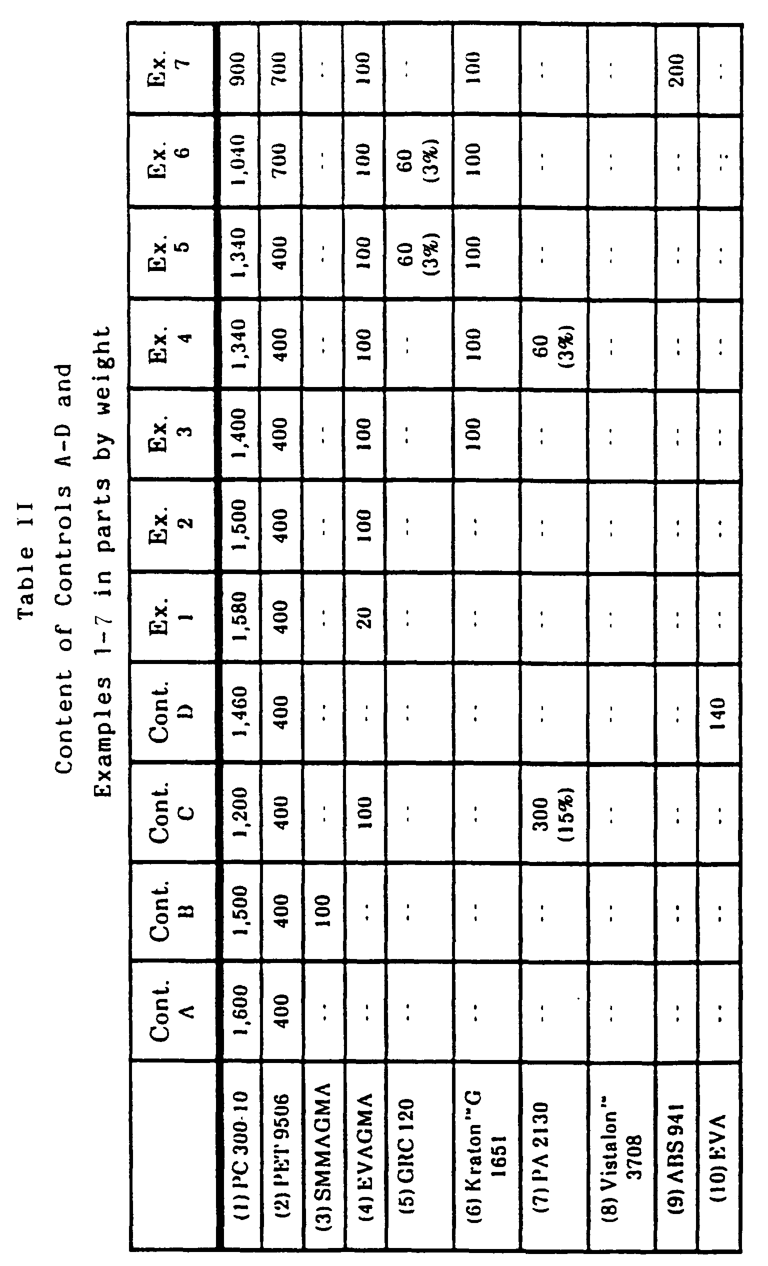

The results of tests performed on the blended polycarbonate compositions of Controls A-D and Examples 1-7 are shown below in Table III.

Impact resistance is measured by the Izod test according to ASTM Designation D 256-84 (Method A). The notch is 10 mils (0.254 mm) in radius. An inverted T (┴) indicates that the notch is cut so that the flexural shock caused by the striking nose of the pendulum is propagated parallel to the direction of flow taken by the molten extrudate during formation of the sample. Vertical parallel lines (II) indicate that the notch is cut so that the flexural shock caused by the striking nose of the pendulum is propagated perpendicular to the direction of flow taken by the molten extrudate during formation of the sample. The result is stated first in ft-lb/in and then in J/m, and is sometimes referred to below as the "Izod value".

Weldline Izod strength is also measured according to ASTM Designation D 256-84 (Method A), but with respect to a sample which has been formed with a butt weld in a double gated mold. The sample is unnotched, and it is placed in the vise so that the weld is coincident with the top surface of the vise jaws. The result is stated first in ft-lb/in and then in J/m, and is sometimes referred to below as the "weldline Izod value".

Flexural modulus is measured in accordance with ASTM Designation D 790-84a. The result is stated first in psi x 10⁵ and then in MPa.

Deflection temperature under load ("DTUL") is measured in accordance with ASTM Designation D 648-82 at 66 psi. The result is stated first in psi and then in MPa.

Tensile strength at break and percent elongation at break are both measured in accordance with ASTM Designation D 638-84 with respect to samples which have, before testing, been (a) heated in a forced air oven at 250°F for 30 minutes, (b) cooled at room temperature for 24 hours, (c) placed under 0.5 percent strain while submerged in a bath of 60 wt percent isooctane and 40 wt percent toluene for 5 minutes, and (d) allowed to dry for 24 hours.

Specular gloss is measured according to ASTM Designation D 523-85 using a Dr. Bruno Lange Reflectometer RB. The beam axis angle is 20°.

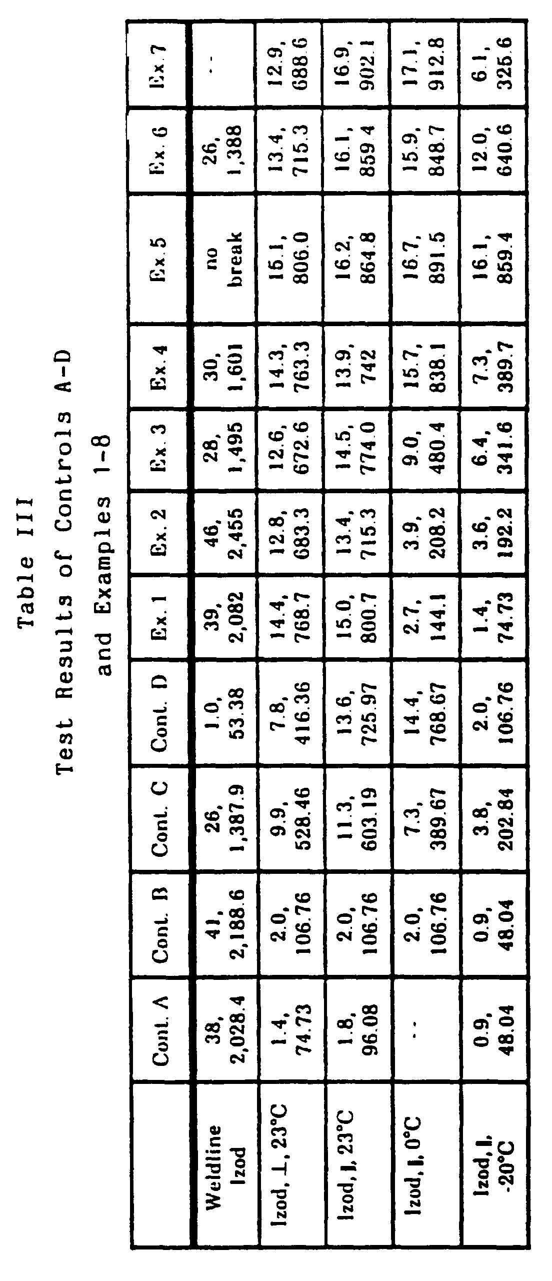

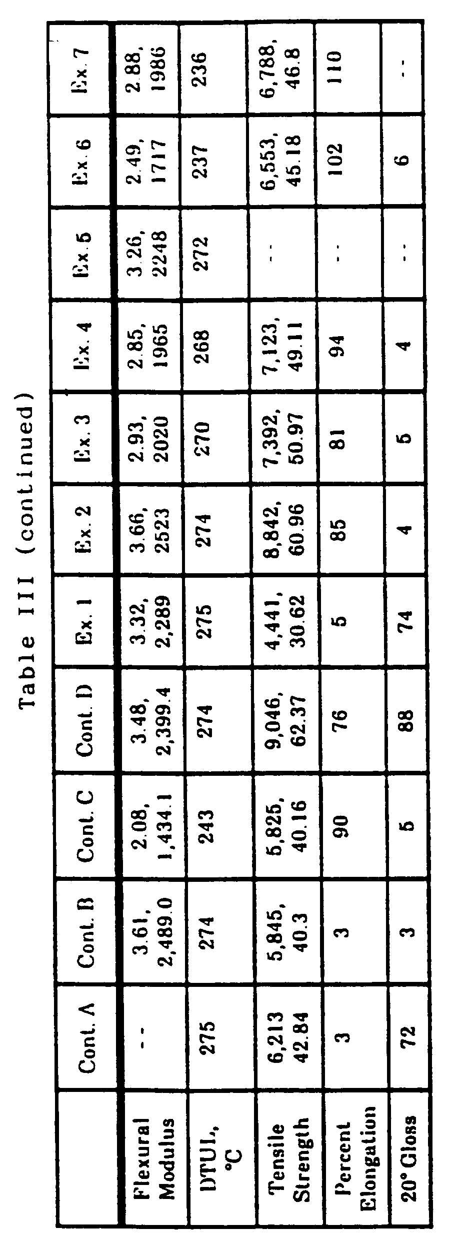

It can be seen from these test results that, when a composition is formed from (a) a polycarbonate, (b) an aromatic polyester and (c) an epoxide-containing modifier having a T_{*g*} less than 0°C, such as in Examples 1 and 2, the resulting composition shows marked improvements in strength over that obtained when, as in Control B, an epoxide-containing modifier having a T_{*g*} greater than 0°C is used as the component (c) instead. In particular, the Izod values are all noticeably higher for Examples 1 and 2 than for Control B. Moreover, it can be seen, by comparing Controls A and B, that the presence of the epoxide-containing modifier having a T_{*g*} greater than 0°C in Control B gives no improvement in the Izod values over Control A, which contains polycarbonate and polyester alone.

When a composition is formed from (a) a polycarbonate, (b) an aromatic polyester and (c) an epoxide-containing modifier having a T_{*g*} less than 0°C, such as in Examples 1 and 2, the resulting composition shows marked improvements in strength over that obtained when, as in Control C, a core-shell graft polymer is additionally admixed therewith at a level exceeding 5 wt percent . In particular, the weldline and room temperature Izod values, the flexural modulus and the DTUL are all noticeably higher for Examples 1 and 2 than for Control C.

When a composition is formed from (a) a polycarbonate, (b) an aromatic polyester and (c) an epoxide-containing modifier having a T_{*g*} less than 0°C, such as in Examples 1 and 2, the resulting composition shows marked improvements in strength over that obtained when, as in Control D, the olefinic modifier does not contain an epoxide. In particular, the weldline Izod values are all noticeably higher for Examples 1 and 2 than for Control D, and the room temperature Izod values are all noticeably higher for Example 1 than for Control D. In addition, Control D exhibits quite high gloss and suffers from severe delamination of the skin layer on repeated bending of the molded part.

When a composition is formed from (a) a polycarbonate, (b) an aromatic polyester, (c) an epoxide-containing modifier having a T_{*g*} less than 0°C, and (d)(i) a thermoplastic elastomer, the resulting composition shows marked improvements in strength over that obtained when, as in Control C, a core-shell graft polymer is used therein at a level exceeding 5 wt percent rather than a thermoplastic elastomer. In particular, the Izod values at room temperature and at low temperatures, the flexural modulus, the DTUL and the tensile strength are all noticeably higher for Example 3 than for Control C.

When a composition is formed from (a) a polycarbonate, (b) an aromatic polyester, (c) an epoxide-containing modifier having a T_{*g*} less than 0°C, (d)(i) a thermoplastic elastomer and (d)(iii) a core-shell graft polymer at a level below 5 wt percent , the resulting composition shows marked improvements in strength over that obtained when, as in Control C, a graft polymer is used therein at a level exceeding 5 wt percent without the addition of a thermoplastic elastomer. In particular, the weldline Izod value, the Izod values at room temperature and at low temperatures, the flexural modulus and the DTUL are all noticeably higher for Examples 4 and 5 than for Control C. Despite containing more than twice as much polyester as Control C, Example 6 also has Izod values, flexural modulus and tensile strength which are noticeably higher than those for Control C.

When a composition is formed from (a) a polycarbonate, (b) an aromatic polyester, and (c) an epoxide-containing modifier having a T_{*g*} less than 0°C, and (d)(ii) a rubber-modified styrene/acrylonitrile copolymer, the resulting composition shows marked improvements in strength over that obtained when, as in Control C, a core-shell graft polymer is used therein at a level exceeding 5 wt percent rather than a rubber-modified styrene/acrylonitrile copolymer. In particular, despite containing more than twice as much polyester as Control C, Example 7 has Izod values, flexural modulus and tensile strength which are noticeably higher than those for Control C.

Contrary to expectation based on the art, these results show that it is not necessary to employ a core-shell graft polymer at levels over 5 wt percent in a composition containing at least a polycarbonate, a polyester and an epoxide-containing modifier to achieve a good balance of impact and flexural strength and DTUL, as well as strength, such as tensile strength, after solvent soaking. For example, the use of a core-shell graft polymer at 15 wt percent , as in Control C, actually lowers the room temperature Izod values, the flexural modulus and DTUL of the resulting composition as compared to all the examples, and lowers the low-temperature Izod values as compared to all examples but Examples 1 and 2, which contain no additional impact modifiers.

## Claims

1. A composition of matter comprising,
(a) an aromatic polycarbonate;
(b) an aromatic polyester;
(c) a terpolymer, having a glass transition temperature less than 0°C, comprising
(i) (A) an olefin monomer, or (B) a copolymer containing a sufficient amount of an olefin monomer to impart a glass transition temperature of less than 0°C to the terpolymer;
(ii) at least one vinyl monomer carrying at least one epoxide group; and
(iii) at least one vinyl monomer not carrying an epoxide group; and
(d) an elastomer component,
characterized in that the elastomer component (d) is a block copolymer comprising a rigid "A" block which has a glass transition temperature above 23-25°C, and a rubbery "B" block which has a glass transition temperature below 23-25°C,
wherein the "A" block polymer is a polyester, and the "B" block polymer is a polyether,
wherein the "A" block polymer is a polystyrene, and the "B" block polymer is a polybutadiene, a polyisoprene, or an ethylene/butylene copolymer, or
wherein the An block polymer is a polyurethane, and the "B" block copolymer is a polyester or polyether.

2. A composition as claimed in Claim 1 further comprising (when such component is not already present as component (d)),(e) one or more members of the group of elastomers consisting of
(i) a block copolymer having a rigid "A" block of polyurethane having a glass transition temperature above 23-25°C and a rubbery "B" block of polyester, polyether or a mixture thereof having a glass transition temperature below 23-25°C;
(ii) a block copolymer comprising a rigid "A" block of polyester which has a glass transition temperature above 23-25°C, and a rubbery "B" block of polyether which has a glass transition temperature below 23-25°C;
(iii) a polyether rubber;
(iv) a block copolymer comprising a rigid "A" block polymerized from a vinyl aromatic compound and having a glass transition temperature above 23-25°C and a rubbery "B" block polymerized from a diene having a glass transition temperature below 23-25°C;
(v) less than five percent, by weight of the total composition, of a core-shell graft copolymer containing more than 40 percent rubber by weight; or
(vi) butyl rubber, ethylene/propylene copolymer, ethylene/propylene/diene copolymer, neoprene, nitrile rubber, polybutadiene, polyisoprene, or a mixture thereof.

3. A composition as claimed in Claim 2 wherein, in component (e)(iv), the "A" block is polymerized from styrene and the "B" block is polymerized from butadiene.

4. A composition as claimed in Claim 3 wherein the block copolymer (e)(iv) is hydrogenated.

5. A composition as claimed in Claim 2(v), wherein the core-shell graft copolymer is characterized in that
(a) its core comprises a conjugated diene or a C₁-C₁₅ acrylate, said core having a glass transition temperature below about 0°C, and
(b) its grafted phase comprises a carboxylic acid ester of a saturated aliphatic alcohol, acrylic or methacrylic acid, a vinyl nitrile compound, a vinyl aromatic compound, or a mixture thereof.

6. A composition as claimed in Claim 2 or Claim 5, wherein the core-shell graft copolymer is acrylonitrile/butadiene/styrene copolymer, methacrylate/butadiene/styrene copolymer, or a mixture thereof.

7. The composition of any one of the preceding claims wherein component (c)(ii), the vinyl monomer carrying at least one epoxide group, is a glycidyl ester of an unsaturated carboxylic acid.

8. The composition of any one of the preceding claims wherein the epoxide-containing copolymer is an ethylene/vinyl acetate/glycidyl methacrylate terpolymer.

9. A composition as claimed in any one of the preceding claims further comprising a filler.

10. A composition as claimed in Claim 9 wherein the filler is talc, clay or mica.

11. A composition as claimed in any one of the preceding claims in the form of a molded article.

## Patentansprüche

1. Stoffzusammensetzung, die umfaßt
(a) ein aromatisches Polycarbonat;
(b) einen aromatischen Polyester;
(c) ein Terpolymer mit einer Glasübergangstemperatur von weniger als 0°C, das umfaßt
(i) (A) ein Olefinmonomer oder (B) ein Copolymer, das eine ausreichende Menge an Olefinmonomer enthält, um dem Terpolymer eine Glasübergangstemperatur von weniger als 0°C zu verleihen;
(ii) mindestens ein Vinylmonomer, das mindestens eine Epoxidgruppe enthält; und
(iii) mindestens ein Vinylmonomer, das keine Epoxidgruppe enthält; und
(d) einen Elastomerbestandteil,
dadurch gekennzeichnet,
daß der Elastomerbestandteil (d) ein Blockcopolymer ist, das einen starren "A"-Block umfaßt, der eine Glasübergangstemperatur über 23 bis 25°C hat und einen gummiartigen "B"-Block, der eine Glasübergangstemperatur unter 23 bis 25°C hat,
worin das "A"-Blockpolymer ein Polyester und das "B"-Blockpolymer ein Polyether ist,
worin das "A"-Blockkpolymer ein Polystyrol und das "B"-Blockpolymer ein Polybutadien, ein Polyisopren oder ein Ethylen/Butylen-Copolymer ist oder
worin das "A"-Blockpolymer ein Polyurethan und das "B"-Blockcopolymer ein Polyester oder Polyether ist.

2. Zusammensetzung nach Anspruch 1, die weiterhin (wenn ein solcher Bestandteil nicht schon als Bestandteil (d) vorliegt) (e) ein oder mehrere Mitglieder der Gruppe der Elastomeren umfaßt, bestehend aus
(i) einem Blockcopolymer mit einem starren "A"-Block von Polyurethan mit einer Glasübergangstemperatur über 23 bis 25°C und einem gummiartigen "B"-Block von Polyester, Polyether oder einer Mischung davon mit einer Glasübergangstemperatur unter 23 bis 25°C;
(ii) einem Blockcopolymer, das einen starren "A"-Block von Polyester, der eine Glasübergangstemperatur über 23 bis 25°C hat und einen gummiartigen "B"-Block von Polyether, der eine Glasübergangstemperatur unter 23 bis 25°C hat umfaßt;
(iii) einem Polyetherkautschuk;
(iv) einem Blockcopolymer, das einen starren "A"-Block, der aus einer Vinyl-aromatischen Verbindung polymerisiert wurde und eine Glasübergangstemperatur über 23 bis 25°C hat und einen gummiartigen "B"-Block, der aus einem Dien polymerisiert wurde mit einer Glasübergangstemperatur unter 23 bis 25°C, umfaßt;
(v) zu weniger als fünf Gewichtsprozent der Gesamtzusammensetzung einem Kern-Schale-Pfropfpolymer, das mehr als 40 Gewichtsprozent Kautschuk umfaßt; oder
(vi) Butylkautschuk, Ethylen/Propylencopolymer, Ethylen/Propylen/Diencopolymer, Neopren, Nitrilkautschuk, Polybutadien, Polyisopren, oder einer Mischung davon.

3. Zusammensetzung nach Anspruch 2, worin in Bestandteil (e) (iv) der "A"-Block aus Styrol polymerisiert und der "B"-Block aus Butadien polymerisiert ist.

4. Zusammensetzung nach Anspruch 3, worin das Blockcopolymer (e) (iv) hydriert ist.

5. Zusammensetzung nach Anspruch 2(v), worin das Kern-Schale-Pfropfcopolymer dadurch gekennzeichnet ist, daß
(a) sein Kern ein konjugiertes Dien oder ein C₁-C₁₅₋ Acrylat umfaßt, wobei der Kern eine Glasübergangstemperatur unter ungefähr 0°C hat und
(b) seine Pfropfphase einen Carbonsäureester eines gesättigten aliphatischen Alkohols, Acryl- oder Methacrylsäure, eine Vinylnitrilverbindung, eine Vinyl-aromatische Verbindung oder eine Mischung davon umfaßt.

6. Zusammensetzung nach Anspruch 2 oder 5, worin das Kern-Schale-Pfropfcopolymer ein Acrylnitril/Butadien/Styrolcopolymer, Methacrylat/Butadien/Styrolcopolymer oder eine Mischung davon ist.

7. Zusammensetzung nach einem der vorhergehenden Ansprüche, worin der Bestandteil (c) (ii) das Vinylmonomer, das mindestens eine Epoxidgruppe enthält, ein Glycidylester einer ungesättigten Carbonsäure ist.

8. Zusammensetzung nach einem der vorhergehenden Ansprüche, worin das Epoxid enthaltende Copolymer ein Ethylen/Vinylacetat/Glycidylmethacrylat-Terpolymer ist.

9. Zusammensetzung nach einem der vorhergehenden Ansprüche, die weiterhin ein Füllmittel umfaßt.

10. Zusammensetzung nach Anspruch 9, worin das Füllmittel Talk, Ton oder Mica ist.

11. Zusammensetzung nach einem der vorhergehenden Ansprüche, in der Gestalt eines Formgegenstandes.

## Revendications

1. Composition de matériau, comprenant :
a) un polycarbonate aromatique ;
b) un polyester aromatique ;
c) un terpolymère ayant une température de transition vitreuse inférieure à 0°C, comprenant :
i) (A) un monomère oléfinique ou (B) un copolymère contenant une quantité suffisante d'un monomère oléfinique pour conférer au terpolymère une température de transition vitreuse inférieure à 0°C ;
ii) au moins un monomère vinylique portant au moins un groupe époxy ; et
iii) au moins un monomère vinylique ne portant pas de groupe époxy ; et
d) un composant élastomère,
caractérisée en ce que le composant élastomère (d) est un copolymère séquencé comprenant une séquence "A" rigide qui a une température de transition vitreuse supérieure à 23-25°C et une séquence "B" caoutchouteuse qui a une température de transition vitreuse inférieure à 23-25°C,
dans laquelle le polymère séquencé "A" est un polyester et le polymère séquencé "B" est un polyéther,
dans laquelle le copolymère séquencé "A" est un polystyrène et le copolymère séquencé "B" est un polybutadiène, un polyisoprène ou un copolymère éthylène/butylène, ou bien
dans laquelle le copolymère séquencé "A" est un polyuréthanne et le copolymère séquencé "B" est un polyester ou un polyéther.

2. Composition selon la revendication 1, comprenant en outre, quand ce composant n'est pas déjà présent en tant que composant (d), (e) un ou plusieurs éléments de l'ensemble des élastomères constitué par :
i) un copolymère séquencé ayant une séquence "A" rigide de polyuréthanne qui a une température de transition vitreuse supérieure à 23-25°C et une séquence "B" caoutchouteuse de polyester, de polyéther ou d'un de leurs mélanges, qui a une température de transition vitreuse inférieure à 23-25°C ;
ii) un copolymère séquencé ayant une séquence "A" rigide de polyester qui a une température de transition vitreuse supérieure à 23-25°C et une séquence "B" caoutchouteuse de polyéther qui a une température de transition vitreuse inférieure à 23-25°C ;
iii) un caoutchouc de polyéther ;
iv) un copclymère séquencé comprenant une séquence "A" rigide polymérisée à partir d'un composé vinylaromatique et qui a une température de transition vitreuse supérieure à 23-25°C et une séquence "B" caoutchouteuse polymérisée à partir d'un diène et qui a une température de transition vitreuse inférieure à 23-25°C ;
v) moins de 5 % en poids, par rapport à la composition totale, d'un copolymère greffé coeur-gaine contenant plus de 40 % en poids de caoutchouc ; et
vi) un caoutchouc butyle, un copolymère éthylène/propylène, un copolymère éthylène/propylène/diène, le néoprène, un caoutchouc nitrile, le polybutadiène, le polyisoprène ou un de leurs mélanges.

3. Composition selon la revendication 2, dans laquelle, dans le composant (e)(iv), la séquence "A" est polymérisée à partir de styrène et la séquence "B" est polymérisée à partir de butadiène.

4. Composition selon la revendication 3, dans laquelle le copolymère séquencé (e) (iv) est hydrogéné.

5. Composition selon la revendication 2(v), dans laquelle le copolymère greffé coeur-giine est caractérisé en ce que :
a) son coeur comprend un diène conjugué ou un acrylate en C₁-C₁₅, ledit coeur ayant une température de transition vitreuse inférieure à environ 0°C, et
b) sa phase greffée comprend un ester d'un acide carboxylique et d'un alcool aliphatique saturé, l'acide acrylique ou méthacrylique, un composé nitrile vinylique, un composé vinylaromatique ou un de leurs mélanges.

6. Composition selon l'une des revendications 2 ou 5, dans laquelle le copolymère greffé coeur-gaine est un copolymère acrylonitrile/butadiène/styrène, un copolymère méthacrylate/butadiène/styrène ou un de leurs mélanges.

7. Composition selon l'une des revendications précédentes, dans laquelle le composant (c) (ii), qui est le monomère vinylique portant au moins un groupe époxy, est un ester glycidylique d'un acide carboxylique insaturé.

8. Composition selon l'une des revendications précédentes, dans laquelle le copolymère époxydé est un terpolymère éthylène/acétate de vinyle/méthacrylate de glycidyle.

9. Composition selon l'une des revendications précédentes, comprenant en outre une charge.

10. Composition selon la revendication 9, dans laquelle la charge est du talc, de l'argile cu du mica.

11. Composition selon l'une des revendications précédentes, ayant la forme d'un article moulé.
